Europäisches Patentamt

European Patent Office

Office européen des brevets

(19)

(11) Veröffentlichungsnummer: **0 140 190**
A2

(12) # EUROPÄISCHE PATENTANMELDUNG

(21) Anmeldenummer: 84111743.5

(22) Anmeldetag: 02.10.84

(51) Int. Cl.⁴: **A 01 C 5/06**
**A 01 C 7/08**

(30) Priorität: 19.10.83 US 543633

(43) Veröffentlichungstag der Anmeldung:
08.05.85 Patentblatt 85/19

(84) Benannte Vertragsstaaten:
DE FR GB SE

(71) Anmelder: DEERE & COMPANY
1 John Deere Road
Moline Illinois 61265(US)

(72) Erfinder: Neumeyer, Lowell Henry
736 - 55th Street
Des Moines Iowa 50312(US)

(74) Vertreter: Sartorius, Peter et al,
DEERE & COMPANY European Office, Patent
Department Postfach 503 Steubenstrasse 36-42
D-6800 Mannheim 1(DE)

(54) Sämaschine.

(57) Eine Egge mit Sämaschine weist an ihrem Hauptrahmen (12) zahlreiche nebeneinander angeordnete, vertikal verschwenkbare Träger (68) zur Aufnahme von Furchenöffnereinrichtungen (32) und sich daran anschließenden Druckrollen (34) auf. Die Furchenöffnereinrichtungen sind an den Trägern (68) mittels Lenker (148) und Stangen (182) vertikal schwenkbar gelagert. Auf den Stangen (182) ist jeweils eine Feder (186) angeordnet, die eine entsprechende Anpreßkraft auf die Furchenöffnereinrichtungen (32) ausübt. Bei einer Aufwärtsverschwenkung der Träger (68) werden die Federn (186) zusammengepreßt und somit die Federstellkraft erhöht. Gleichzeitig wird jedoch der effektive Drehmomentenarm für die Furchenöffnereinrichtungen (32) verkleinert, so daß der Anpreßdruck für die Furchenöffnereinrichtungen annähernd konstant gehalten werden kann.

EP 0 140 190 A2

./...

FIG. 3

Sämaschine

Die Erfindung bezieht sich auf eine Sämaschine mit einem quer verlaufenden Hauptrahmen, der sich auf Laufrädern abstützt und an dem Furchenöffner- und Druckrolleneinrichtungen angeordnet sind, wobei zumindest die Furchenöffnereinrichtungen an vertikal verschwenkbar gelagerten Lenkern angeordnet und gegen die Wirkung von Federn verstellbar sind.

Es ist bereits eine Sämaschine mit einem Sammelbehälter für Düngemittel und Saatgut bekannt (US-A-4 116 140), die aus einem Hauptrahmen mit vertikal verschwenkbarem Ausleger besteht, an dem über eine Halterung eine Furchenöffnereinrichtung starr angeordnet ist, so daß bei einer Schwenkbewegung des Auslegers die Furchenöffnereinrichtung mit nach oben verschwenkt wird. Zwischen dem Ausleger zur Aufnahme der Furchenöffnereinrichtung und dem Hauptrahmen befindet sich eine Gestängeanordnung, auf der eine Druckfeder angeordnet ist, die auf den Ausleger einen Druck ausübt und somit den notwendigen Anpreßdruck für die Furchenöffnereinrichtung erzielt. Bei einer Aufwärtsbewegung der Furchenöffnereinrichtung wird die Feder zusammengedrückt und somit die auf den Boden einwirkende Stellkraft proportional erhöht. An den Auslegerteil ist ferner ein weiterer Rahmenteil zur Aufnahme von Druckrollen vertikal schwenkbar angeschlossen.

Ferner ist eine Sämaschine der eingangs aufgeführten Art bekannt (US-A-4 030 428), die einen horizontal verlaufenden, rechteckförmig ausgebildeten Hauptrahmen aufweist, der sich über Laufräder auf dem Boden abstützt. Zwischen den Rahmenteilen des Hauptrahmens befinden sich vertikal verschwenkbare Lenker zur Aufnahme von Furchenöffnereinrichtungen, die gegen die Wirkung einer Druckfeder nach oben verschwenkbar sind, so daß auch hier der Anpreßdruck auf die Furchenöffnereinrichtung erhöht wird, wenn die Furchenöffnereinrichtung infolge eines auftretenden Hindernisses nach oben verschwenkt wird.

Demgegenüber liegt der Erfindung die Aufgabe zugrunde, den Rahmen mit den zugehörigen verschwenkbaren Rahmenteilen zur Aufnahme von Furchenöffnereinrichtungen und Druckrollen derart auszubilden und anzuordnen, daß bei einer Aufwärtsverstellung der Druckrollen bzw. der Furchenöffnereinrichtungen der Anpreßdruck für die Furchenöffnereinrichtungen annähernd konstant gehalten werden kann.

Diese Aufgabe ist dadurch gelöst worden, daß an dem Hauptrahmen sich in Längsrichtung erstreckende, in Vertikalebene verschwenkbare Träger zur endseitigen Aufnahme von Druckrollen angeordnet sind und die vertikal verschwenkbaren Lenker zur Aufnahme der in der gleichen Ebene wie die Druckrollen angeordneten Furchenöffnereinrichtungen mittels einer Gelenkverbindung vor den Druckrollen an die Träger angeschlossen sind, die gemeinsam mit der Gelenkverbindung gegenüber dem Hauptrahmen vertikal verschwenkbar sind. Durch die vorteilhafte Ausbildung und Anordnung des Hauptrahmens mit den zugehörigen verschwenkbaren Rahmenteilen, insbesondere dem verschwenkbaren Träger und den vertikal verschwenkbaren Lenkern zur Aufnahme der Furchenöffnereinrichtungen, werden bei einer Aufwärtsverschwenkung der Druckrollen die zugehörigen Träger nach oben verschwenkt und gleichzeitig auch die Gelenkstelle der Lenker zum Anschluß der Furchenöffnereinrichtungen. Hierdurch werden die auf die Träger einwirkenden Federstellkräfte erhöht, jedoch gleichzeitig auch der effektive Drehmomentenarm, der auf die Furchenöffnereinrichtungen einwirkt, verringert, so daß der Anpreßdruck der Furchenöffnereinrichtungen auf den Boden annähernd konstant gehalten werden kann. Hierzu ist es gemäß der Erfindung vorteilhaft, daß die Druckrollen an Tragarmen drehbar gelagert sind, die um eine annähernd aufrecht stehende Achse an den vertikal schwenkbar gelagerten Trägern verschwenkbar angeordnet sind, und daß an dem Hauptrahmen
mindestens zwei mit Abstand zueinander angeordnete Träger schwenkbar gelagert sind, die im Bereich ihrer vorderen Enden über einen ersten Querträger und im Bereich
ihrer hinteren Enden über einen zweiten Querträger bzw.
Winkelträger miteinander verbunden sind, wobei an dem ersten Querträger die Lenker für die Furchenöffnereinrichtungen und an dem zweiten Winkelträger die Tragarme für
die Druckrollen schwenkbar angeschlossen sind. Durch die
Verschwenkung der Tragarme zur Aufnahme der Druckrollen
um eine annähernd aufrechte Achse wird gewährleistet, daß
seitlich auftretende Kräfte, die auf die Druckrollen einwirken, keine Beschädigungen an den Druckrollen bzw. den
zugehörigen Rahmenteilen hervorrufen. Dadurch wird auch
der Träger zur Aufnahme der Furchenöffnereinrichtungen
weniger stark beansprucht, da seitliche Kräfte, die auf
die Druckrollen bzw. die Furchenöffnereinrichtungen einwirken, gering gehalten werden können. Um auf einfache
Weise eine gestaffelte Anordnung der Furchenöffnereinrichtungen vornehmen zu können, ist es vorteilhaft, daß der
erste Querträger als Hutprofil-Querträger ausgebildet ist
und einen vorderen Steg zum wahlweisen Anschluß eines vorderen Lenkers und einen hinteren Steg zum wahlweisen Anschluß eines hinteren Lenkers aufweist. Die zahlreichen
Anschlußstellen an den Hutprofil-Querträger gestatten
auf einfache Weise eine unterschiedliche Anordnung der
Furchenöffnereinrichtungen, so daß sie einmal hintereinander angeordnet werden können und zum anderen auch auf
der gleichen Quermittelebene. Durch die gestaffelte Anordnung der Furchenöffnereinrichtungen kann das Klumpen
von Erdreich insbesondere dann ausgeschaltet werden,
wenn der Boden sehr uneben ist bzw. zahlreiche Fremdkörper, beispielsweise Steine, enthält. Durch die Verwendung des Hutprofil-Querträgers ist auch ein schnelles
Umrüsten der Furchenöffnereinrichtungen möglich.

In weiterer Ausgestaltung der Erfindung ist es vorteilhaft, daß die Träger über eine eine Feder aufweisende Zugstange mit dem Hauptrahmen gelenkig verbunden sind, wobei die Feder der Aufwärtsbewegung des Trägers entgegenwirkt, und daß die Feder auf der Zugstange angeordnet ist, daß die Feder zwischen einem Gelenklager der Zugstange am Träger und einem zweiten Gelenklager am Hauptrahmen eingeklemmt ist und das zweite Gelenklager eine Querbohrung zur verschiebbaren Aufnahme der Zugstange aufweist. Vorteilhaft ist es ferner, daß Rahmenteile der Furchenöffnereinrichtung über ein Gestänge an einen gegenüber dem Hauptrahmen einstellbaren Stellarm angeschlossen sind und daß zwischen einer auf dem Gestänge angeordneten, in verschiedenen Positionen arretierbaren Klammer und dem Stellarm eine Feder angeordnet ist, die bei einer Aufwärtsverstellung der Furchenöffnereinrichtung bzw. der zugehörigen Lenker, die unmittelbar unterhalb der oberen Anschlußstelle des Gestänges an den Hauptrahmen angeschlossen sind, und bei einer Verschiebung des Stellarmes in einem Gelenklager eine annähernd konstante Kraft auf die Furchenöffnereinrichtung ausübt. Da das Gestänge zum Anschluß der Furchenöffnereinrichtungen an seinem oberen Ende in einem Lager verschiebbar aufgenommen ist und die Lenker an den Trägern unmittelbar unterhalb der oberen Anschlußstelle des Gestänges an dem Stellarm befestigt sind, läßt sich auf einfache Weise bei einer Verschwenkung der Lenker mit den Furchenöffnereinrichtungen bei einer Erhöhung der durch die Feder hervorgerufenen Anpreßkraft der Drehmomentenarm verringern, so daß die auf die Furchenöffnereinrichtungen wirkenden Kräfte konstant bleiben. Hierzu ist es vorteilhaft, daß die Achse bzw. die Kraftlinie der Feder mit Bezug auf die Standfläche der Sämaschine geneigt und oberhalb des zweiten Trägers verläuft, wobei der Abstand zwischen der Kraftlinie und dem zweiten Träger kleiner wird, wenn der zweite Träger gemeinsam mit dem längs verlaufenden Träger nach oben verschwenkt wird. Hierdurch wird auch ferner der wirksame Hebel, der durch die Gelenkstelle des Lenkers am Träger verläuft und die Kraftlinie der Feder rechtwinklig schneidet, kleiner. Da der wirksame Hebelarm kleiner wird, kann bei einer Aufwärtsbewegung des Trägers die hierdurch hervorgerufene Vergrößerung der Stellkraft der Feder wieder so kompensiert werden, daß der Anpreßdurck für die Furchenöffnereinrichtung annähernd konstant gehalten werden kann. Um auf einfache Weise den Anpreßdruck für die Furchenöffnereinrichtungen zu verändern, ist es vorteilhaft, daß der Stellarm mittels einer am Hauptrahmen angeordneten Stellvorrichtung gegenüber dem Hauptrahmen zur Veränderung der Stellkraft der Feder verschwenkbar ist und daß die Stellvorrichtung an einen am Hauptrahmen in Halterungen drehbar gelagerten Querträger angeschlossen ist. Ferner ist es vorteilhaft, daß an dem Querträger zahlreiche Stellarme zum gelenkigen und verschiebbaren Anschluß der Stangen vorgesehen sind, die mit ihren entsprechenden unteren Enden an die Rahmenteile der Furchenöffnereinrichtungen gelenkig angeschlossen sind, und daß am oberen Ende der die Feder aufnehmenden Zugstange eine weitere Zugstange gelenkig angeschlossen ist, die mit ihrem unteren Ende in einer am Träger vorgesehenen Halterung axial verschiebbar aufgenommen ist.

Außerdem ist es vorteilhaft, daß der Tragarm zur Aufnahme der Druckrollen am Ende der vertikal verschwenkbaren Träger beweglich angeschlossen ist, daß die Gelenkverbindung zwischen dem Tragarm und dem Träger aus einer elastischen Buchse gebildet ist, die zwischen der Unterseite des Trägers und der Oberseite des Tragarmes eingeklemmt und mittels eines Schraubenbolzens gesichert ist, und daß die Druckrollen um eine annähernd vertikal verlaufende, sich durch den Schraubenbolzen erstreckende Achse verschwenkbar sind. Hierdurch können die auf die Druckrollen einwirkenden Kräfte besser kompensiert werden.

Im folgenden wird die Erfindung anhand von lediglich einen Ausführungsweg darstellenden Zeichnungen näher erläutert. Es zeigt:

Fig. 1   eine Egge mit einer Sämaschine in Seitenansicht,

Fig. 2   eine Draufsicht der Egge gemäß Fig. 1,

Fig. 3   eine Seitenansicht eines Teiles einer Furchenöffnereinrichtung und einer Andruckrolle gemäß Fig. 1, jedoch in größerem Maßstab,

Fig. 4   eine perspektivische Darstellung des vorderen Teils der Furchenöffnereinrichtung sowie der zugehörigen Rahmenteile zur Aufnahme der Andruckrolle gemäß Fig. 3,

Fig. 5   eine Draufsicht der Andruckrolle gemäß Fig. 1 und 3,

Fig. 6   eine Teilansicht entlang der Linie 6 - 6 gemäß Fig. 5,

Fig. 7   eine Doppelscheibe der Furchenöffnereinrichtung in der Ansicht entlang der Linie 7 - 7 gemäß Fig. 3.

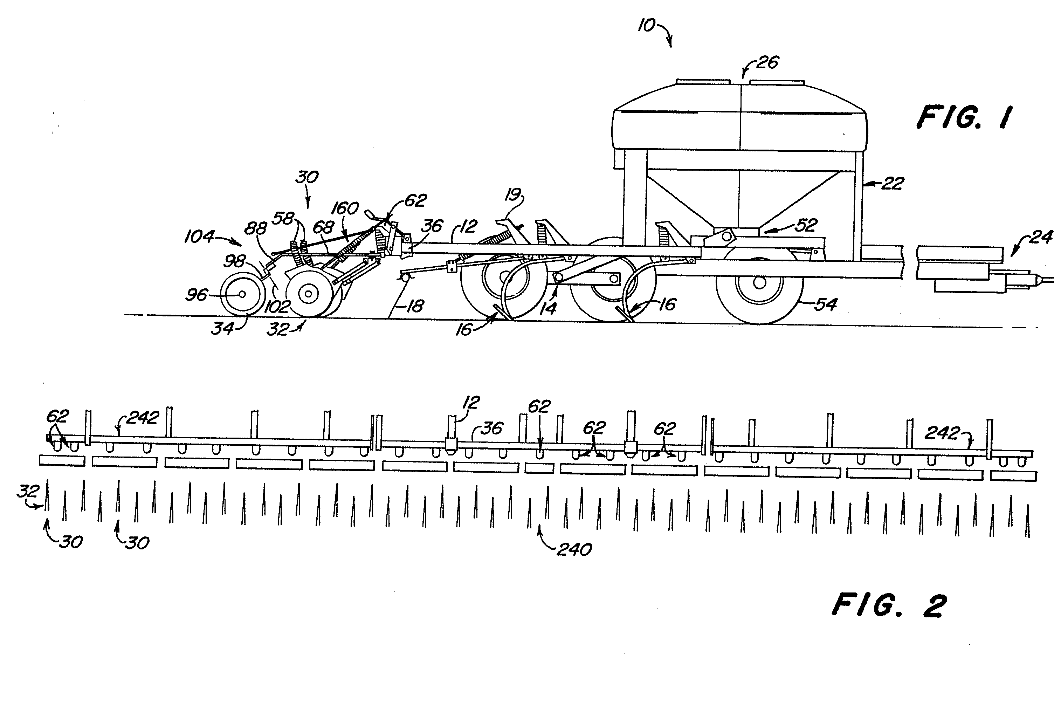

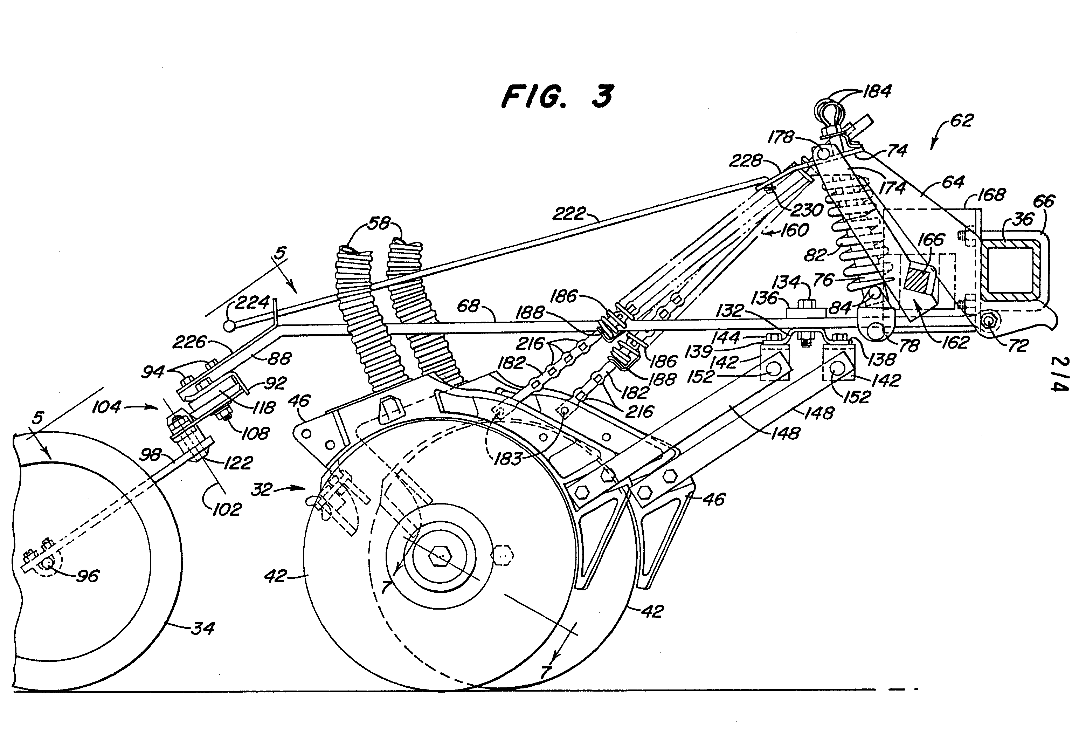

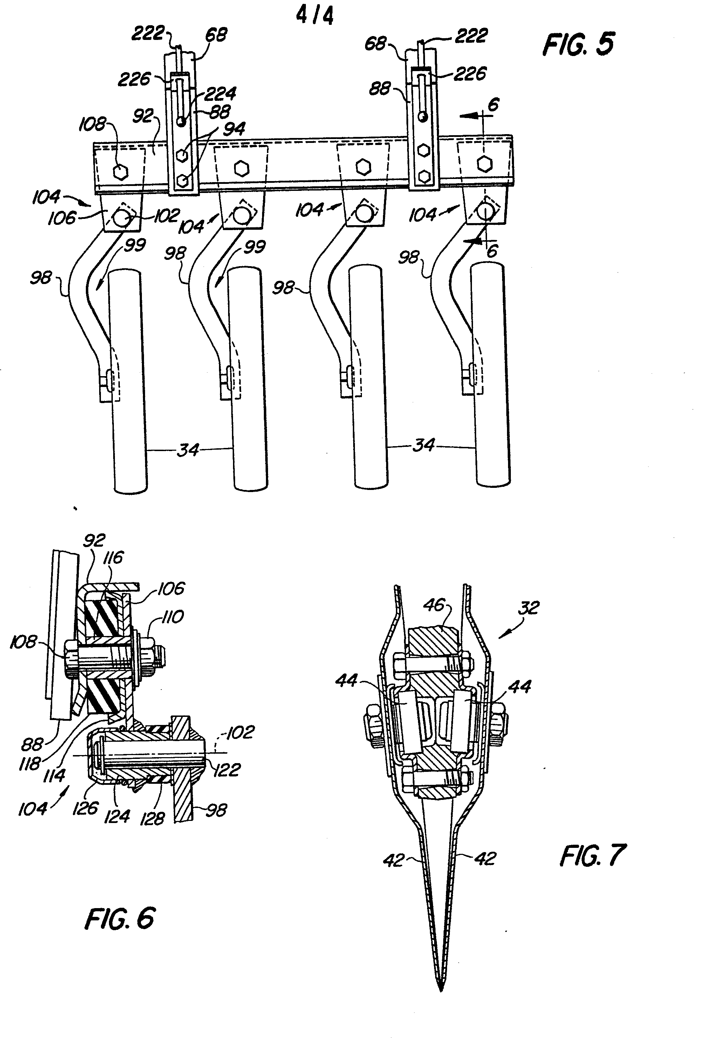

In der Zeichnung ist in Fig. 1 die Kombination einer Egge mit einer Sämaschine mit 10 bezeichnet, die einen Hauptrahmen 12 aufweist, der mittels einer vertikal einstellbaren Laufradvorrichtung 14 auf dem Boden abstützbar ist. Der Hauptrahmen 12 weist zahlreiche Eggenzinken 16 auf, denen Zustreichelemente 18 nachgeordnet sind, die ebenfalls mit dem Hauptrahmen 12 verbunden sind. Auf dem Hauptrahmen 12 befinden sich eine Rahmenkonstruktion 22 und eine Anhängevorrichtung 24 zum Anschluß an einen Schlepper. Die Rahmenkonstruktion 22 dient zur Aufnahme eines Sammelbehälters 26 für Saatgut und Düngemittel. Die Zustreichelemente 18 können eine oder mehrere Reihen Furchen glattstreichen, die durch die an dem Hauptrahmen 12 angeordneten Eggenzinken 16 gebildet werden. Die Zustreichelemente 18 sind ebenfalls über druckfederbeaufschlagte Halterungen 19 an den Hauptrahmen 12 angeschlossen. Die Eggenzinken 16 sind federelastisch ausgebildet und beispielsweise mit entsprechenden Kultivatorscharen ausgerüstet. An dem Hauptrahmen 12 befinden sich zahlreiche Furchenöffner- und Druckrollengruppen, die jeweils mit zwei oder mehr Furchenöffnereinrichtungen 32 und entsprechend nachgeordneten Druckrollen 34 ausgerüstet sind. Die Furchenöffnereinrichtungen 32 und die Druckrollen 34 sind an einem Querträger 36 des Hauptrahmens 12 mit seitlichem Abstand zueinander angeordnet. Die Furchenöffnereinrichtung 32 besteht aus einem Doppelscheibenschar (Fig. 3 und 7) mit jeweils zwei Scheiben, die mittels Lager 44 an einem Auslaufteil 46 einer Saatgutzuführvorrichtung angeordnet sind. Die Saatgut- bzw. Kunstdüngerversorgungseinrichtung weist eine Saatgut- und/oder Kunstdüngerdosierungsvorrichtung 52 auf, die sich unter dem Sammelbehälter 26 befindet und mit einem Dosierungsrad 54 in Antriebsverbindung steht, die das Saatgut bzw. das Düngemittel der Saatgut- und Düngemittelversorgungseinrichtung zuführt, zu der Rohr- bzw. Schlauchleitungen 58 gehören, die mit dem entsprechenden Auslaufteil 46 verbunden sind.

Die Furchenöffner- und Druckrolleneinrichtung 30, die mit mehr als zwei Druckrollen und Furchenöffnern ausgerüstet ist, ist mittels druckfederbeaufschlagter Halterungen 62 an den Hauptrahmen 12 angeschlossen. Die Halterung 62 besteht aus einem gabelförmigen Träger 64, der mittels eines U-Bügels 66 an dem Querträger 36 befestigt ist. Ein sich in Längsrichtung des Arbeitsgerätes erstreckender Träger 68 ist mittels seines vorderen Endes und eines Gelenkes 72 an den unteren Teil des Querträgers 36 gelenkig angeschlossen. Die Halterung 62 weist eine nach vorne gerichtete, geneigt verlaufende Anlagefläche 74 und eine Zugstange 76 auf, deren oberes Ende durch eine in der Anlagefläche 74 vorgesehene Bohrung gesteckt ist. Das untere Ende der Zugstange 76 ist an eine U-förmig ausgebildete Halterung 78 hinter dem Gelenk 72 und vor der vertikal verlaufenden Querebene, die sich an der Anlagefläche 74 vorbeierstreckt, angeschlossen. Zwischen der Anlagefläche 74 und einem Bolzen 84 ist eine Feder 82 eingeklemmt (siehe Fig. 3), wobei der Bolzen 84 oberhalb der Ebene des Gelenkes 72 auf der Halterung 78 liegt. Die Feder 82, die als Druckfeder ausgebildet sein kann, weist eine etwas ansteigende Federkonstante auf, so daß sich diese bei Zusammendrücken der Feder etwas erhöht und der größer werdende Druck auf den Träger 68 übertragen wird, wenn er um das Gelenk 72 nach oben verschwenkt wird. Der Träger 68 verläuft horizontal und erstreckt sich von dem Gelenk 72 über und zwischen der Furchenöffnereinrichtung 32 nach hinten und weist endseitig einen nach unten abgewinkelten Endteil 88 auf, der mit dem horizontal verlaufenden Teil des Trägers 68 einen nach unten offenen stumpfen Winkel bildet.

Ein Winkelträger 92 ist an der Unterseite der Endteile 88 angeordnet und mittels Schraubenbolzen 94 gesichert. Die Druckrollen 34 sind mittels Achsen 96 an Tragarme 98 angeschlossen (siehe Fig. 3 und 6), die um eine annähernd vertikal verlaufende Achse 102 verschwenkbar sind. Der Tragarm 98 ist mittels einer Halterung 104 an den Winkelträger 92 angeschlossen. Der Tragarm 98 ist im mittleren Bereich 99 (siehe Fig. 5) S-förmig gebogen, um genügend Freiraum für die Druckrollen 34 zu schaffen. Die Halterung 104 (siehe Fig. 5) ist keilförmig ausgebildet und mittels eines Schraubenbolzens 108 und einer Mutter 110 an die Winkelhalterung 92 angeschlossen. Die Tragplatte 106 ist hierzu zwischen einer tassenförmigen Platte 114 und der Mutter 110 eingeklemmt, die mit einer entsprechenden fest angeordneten Unterlegscheibe ausgerüstet sein kann. Zwischen der Unterseite der Winkelhalterung 92 und der Unterlegscheibe der Mutter 110 befindet sich eine elastische Buchse 118, die beispielsweise aus Gummi oder aus einem anderen elastischen Material hergestellt sein kann. Auf diese Weise kann die Platte 106 um einen bestimmten Betrag in vertikaler Richtung, und zwar in Richtung der Winkelhalterung 92, verstellt werden. An das vordere Ende des Tragarmes 98 ist ein Gelenkbolzen 122 angeschlossen, beispielsweise angeschweißt. Der Gelenkbolzen 122 erstreckt sich durch eine Buchse 124, die an die Tragplatte 106 angeschweißt ist. Eine Kappe 126 zur Aufnahme von Schmiermittel dichtet den oberen Teil der Buchse 124 ab, während eine untere Dichtungsbuchse 128 verhindert, daß Schmutzpartikel in den unteren Teil der Buchse 124 eindringen. Der Gelenkbolzen 122 wird mittels Schmiermittel versorgt, das sich in den Freiräumen im Bereich der Gelenkstelle des Gelenkbolzens 122 ansammelt.

Die Halterung 104 gestattet der Druckrolle 34, um die Achse 102 zu schwenken, die mit Bezug auf die vertikale Ebene etwas nach hinten geneigt verlaufend angeordnet ist. Auf diese Weise werden seitliche Druckkräfte, die auf die Druckrolle 34 bei Fahrtrichtung einwirken, klein gehalten. Die seitlichen Druckkräfte würden sonst auftreten, da die Druckrollen 34 mit Bezug auf den Drehpunkt des Arbeitsgerätes während einer Richtungsänderung sehr weit nach hinten versetzt angeordnet sind. Ferner gestattet die gummiartige Buchse 118 einer jeden Druckrolle 34 einer Furchenöffner- und Druckrolleneinrichtungsgruppe, sich individuell auf- und abwärts zu bewegen, unabhängig von den übrigen Druckrollen der Gruppe, so daß ein gleichmäßiges Andrücken der einzelnen Furchen gewährleistet wird, auch dann, wenn die Bodenoberfläche relativ unregelmäßig ist.

Wie aus Fig. 3 hervorgeht, befindet sich hinter der Halterung 78 an dem Träger 68 ein im Querschnitt hutförmiger Träger 132. Auf dem Träger 68 liegen Platten 136 mit jeweils zwei Bohrungen zur Aufnahme von Schraubenbolzen 134 auf, die sich durch im Träger 132 vorgesehene Bohrungen erstrecken, um somit den Träger 132 mit den einzelnen Trägern 68 fest zu verbinden. Der hutförmige Träger 132 weist einen vorderen horizontal verlaufenden Steg 138 und einen hinteren Steg 139 auf, in dem zahlreiche nebeneinander angeordnete Bohrungen 140 vorgesehen sind. An den Stegen 138 und 139 sind mittels Schraubenbolzen 144, die sich durch die Bohrungen 140 erstrecken, Winkelhalterungen 142 angeschlossen, wobei jeweils ein Schenkel sich in vertikaler Richtung erstreckt. Eine jede Furchenöffnereinrichtung 32 weist zwei sich nach hinten und oben erstreckende Lenker 148 auf, die zur Aufnahme des Auslaufteiles 46 dienen. Das vordere Ende eines jeden Lenkers 148 ist mittels einer Nietverbindung oder Schraubenbolzen 152 gelenkig an den vertikal verlaufenden Schenkel der Winkelhalterung 142 angeschlossen, so daß der Lenker 148 um eine horizontal verlaufende, sich durch die Nietverbindung 152 erstreckende Achse verschwenken kann. Die Furchenöffnereinrichtung 32 kann, wie aus Fig. 3 hervorgeht, mit Bezug auf die Fahrtrichtung nach hinten versetzt angeordnet sein. Um beispielsweise die Fahrtgeschwindigkeit beim Säen auf feinem Boden zu erhöhen, können die Winkelhalterungen 142 lediglich an einen der Stege 138 bzw. 139 angeschlossen werden, so daß die nebeneinander liegenden Furchenöffnereinrichtungen 32 auf einer quer verlaufenden Ebene angeordnet sind.

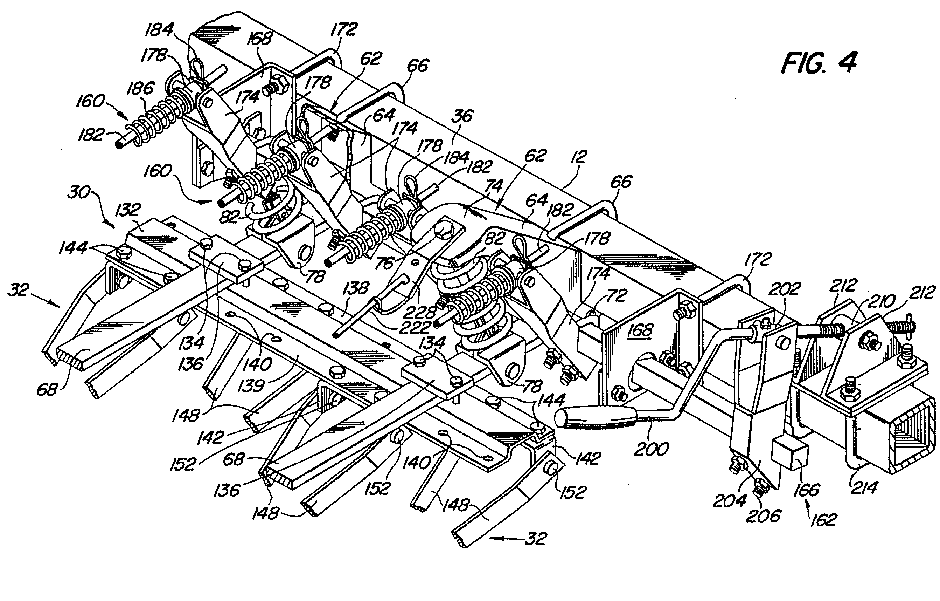

Um die nach unten wirkenden Stellkräfte der Furchenöffnereinrichtungen 32 zu erhöhen, um eine einwandfreie Bearbeitung des Bodens mittels der Scheiben 42 zu erreichen und die Anpreßkräfte der Furchenöffnereinrichtung, insbesondere der Scheiben 42, zu erhöhen, ist eine Druckfeder 160 vorgesehen, die zwischen einem jeden Auslaufteil 46 und dem Rahmen 12 angeordnet ist. Eine Stellvorrichtung 162 besteht aus einem rechteckförmigen Querträger 166, der hinter dem Querträger 36 und oberhalb des Trägers 68 drehbar gelagert ist. Hierzu dienen zwei Halterungen 168, die mittels Bügelschrauben 172 an die Rückseite des Querträgers 36 angeschlossen sind. Ein sich nach oben und hinten erstreckender Stellarm 174 ist einenends an den Querträger 166 angeschlossen und liegt in etwa auf der gleichen Längsmittelebene wie die Furchenöffnereinrichtung 32. Ein jeder Stellarm weist an seinem oberen Ende eine Gabel zur Aufnahme eines Gelenkbolzens 178 auf. Die Druckfedereinrichtung 160 besteht aus einer Stange 182, die einenends mit dem Auslaufteil 46 mittels eines Bolzens 184 und anderenends über den Gelenkbolzen 176 mit der Gabel des Stellarmes 174 verbunden ist. Die Stange 182 ist in dem Gelenkbolzen 178 verschiebbar aufgenommen, so daß die Furchenöffnereinrichtung 32 sich auf- und abwärts bewegen kann, wobei ein Bolzen 184 verhindert, daß die Stange 182 aus dem Gelenkbolzen 178 herausgleitet, so daß hierdurch die Abwärtsverstellung der Furchenöffnereinrichtung 32 begrenzt wird. Zwischen dem Gelenkbolzen 178 und einer auf der Stange 182 verschiebbar angeordneten Klammer 188 ist eine Feder 186 angespannt. Die Feder 186 wirkt gegen die Klammer 188 und die Stange 182, um auf diese Weise die Furchenöffnereinrichtung 32 um die Nietverbindung 152 nach unten zu verschwenken bzw. zu drücken. In einer Gelenkmuffe 202 ist, wie aus Fig. 4 hervorgeht, ein Kurbelarm 200 drehbar aufgenommen, wobei die Gelenkmuffe in einer Gabel einer Halterung 204 aufgenommen ist, die mittels U-Bügelschrauben 206 an den Querträger 166 angeschlossen ist, der über den Kurbelarm 200 verstellt werden kann, um den Winkel des Stellarmes 174 und somit die Stellkraft der Feder 186 zu verändern. Der Kurbelarm 200 weist ein Gewindeende auf, das in einer Muffe 210 drehbar aufgenommen ist, die mittels eines Gelenkbolzens in einer Halterung 212 aufgenommen ist. Die Halterung 212 ist mittels U-Bügelschrauben 214 an den Querträger 36 angeschlossen. Eine jede Klammer 188 kann in jede beliebige Arretierungsstellung verstellt werden, um die Druckkraft der entsprechenden Feder 186 zu verändern. Die Stellvorrichtung 162 gestattet, den Einstelldruck auf die Furchenöffnereinrichtung 32 dementsprechend gleichzeitig zu verändern.

Wie aus Fig. 3 hervorgeht, hängt der effektive Momentenarm, durch den die Kraft der Druckfeder 186 auf die Furchenöffnereinrichtung 32 wirkt, um auf die Bodenoberfläche gedrückt zu werden, von der Stelle der Nietverbindung 152 ab, um die die Lenker 148 schwenken. Werden die Träger 68 infolge der Rahmenbewegung bei Fahrten über unebenes Gelände nach oben bewegt, so wird auch die Gelenkachse, die sich durch die Nietverbindung 152 erstreckt, mit den Trägern 68 nach oben verstellt, und zwar auf eine Stelle, die näher an der Feder 186 liegt. Hierdurch wird der effektive Momentenarm verkleinert, durch den die Feder 186 auf den Träger 68 wirkt. Zur gleichen Zeit kann die Furchenöffnereinrichtung 32 um die Nietverbindung 152 nach oben verschwenkt werden, wobei diese Schwenkbewegung von der Rahmenbewegung abhängt, wenn das Arbeitsgerät über unebenes Gelände fährt. Hierbei wird die Feder 186 zusammengedrückt und somit die Stellkräfte vergrößert.

Verringert sich jedoch der effektive Momentenarm bei einer Aufwärtsbewegung der Gelenkachse, die sich durch die Nietverbindung 152 erstreckt, so bleibt der Druck, der auf die Furchenöffnereinrichtung 32 wirkt, im wesentlichen konstant. Bei einer Verstellung der Furchenöffnereinrichtung 32 nach unten nehmen die Druckkräfte, die durch die Feder 186 hervorgerufen werden, ab. Zur gleichen Zeit bewegen sich die Träger 68 nach unten, damit die Druckrollen 34 ihren Bodenkontakt beibehalten können. Durch die Abwärtsverstellung der Gelenkachse, die sich durch die Nietverbindung 152 erstreckt, wird der effektive Momentenarm, durch den die Federn 186 wirken, größer, so daß ein konstanter Abwärtsdruck auf die Furchenöffnereinrichtungen ausgeübt wird. Die Anordnung der Furchenöffnereinrichtung 32 und der Träger 68 ist in Fig. 3 veranschaulicht. Aus dieser Anordnung läßt sich entnehmen, daß die Furchenöffnereinrichtung 32 sowie die Druckrollen 34 in vertikaler Ebene einen relativ großen Stellbereich aufweisen. Die Halterung 62 bewirkt einen relativ konstanten Druck auf die Druckrollen 34, während durch die Bewegung der Gelenkachse, die sich durch die Nietverbindung 152 erstreckt, in Verbindung mit der Schwenkbewegung der Träger 68 die durch die Feder 186 hervorgerufenen Druckkräfte kompensiert werden, so daß ein relativ konstanter Abwärtsdruck auf die Furchenöffnereinrichtung 32 ausgeübt werden kann. Um die geometrische Anordnung zwischen den vorderen und hinteren Furchenöffnereinrichtungen 32 aufrechtzuerhalten, wenn diese gestaffelt angeordnet sind, ist aus diesem Grund der vordere Stellarm 174 für die vordere Furchenöffnereinrichtung 32 kürzer als der Stellarm 174 für die hintere Furchenöffnereinrichtung 32, so daß die Druckfedereinrichtung 160 in etwa parallel und in gleichmäßigem Abstand zu der Gelenkachse, die sich durch die Nietverbindung 152 erstreckt, verläuft (Fig. 3). Der Stellarm 174 für die vordere Furchenöffnereinrichtung 32 wird durch einen kürzeren Stellarm ausgetauscht, wenn die Plazierung der Furchenöffnereinrichtung in gestaffelter Weise erfolgen soll.

Damit die Träger 68 und die Druckrollen 34 nicht zu weit nach unten verstellt werden, wenn der Hauptrahmen 12 mittels der Laufradvorrichtung 14 in eine Transportstellung angehoben wird, ist eine Zugstange 222 einenends an die Halterung 62 und das gegenüberliegende Ende an die Träger 68 angeschlossen. Die Zugstange 222 ist endseitig mit einem Anschlag versehen und verschiebbar in einer Halterung 226 aufgenommen, die an dem Endteil 88 mittels Schraubenbolzen 94 befestigt ist. An der Halterung 62 befindet sich eine Lasche 228, die mit einer Öffnung zur Aufnahme eines abgewinkelten Teils bzw. des oberen Endes der Zugstange 222 ausgerüstet ist. Damit die Zugstange 222 aus

**DEERE & COMPANY**

EUROPEAN OFFICE
      - 14 -
      0140190

der Öffnung der Lasche 228 nicht herausgleiten kann, ist der abgewinkelte Teil mittels eines Sicherungsstiftes 230 gesichert. Wird das Bodenbearbeitungsgerät, beispielsweise die Egge mit der zugehörigen Sämaschine, angehoben und in eine Position gemäß Fig. 1 und 3 verstellt, so werden die Träger 68 abgesenkt, bis das Ende bzw. der Anschlag 224 der Zugstange 222 gegen die Halterung 226 zur Anlage kommt. Hierdurch wird eine weitere Abwärtsverstellung bzw. Abwärtsverschwenkung der Träger 68 verhindert. Die Stangen 182 verhindern, daß die Furchenöffnereinrichtungen 32 unterhalb einer bestimmten Stelle abgesenkt werden, wenn der Hauptrahmen 12 seine Transportstellung eingenommen hat. Die Zugstange 222 gestattet den Trägern 68, in eine Transportstellung nach oben verschwenkt zu werden, wenn während der Transportfahrt ein größeres Hindernis passiert werden muß. Die Druckrollen 34 können ebenfalls während der Transportfahrt frei schwenken, so daß sogar bei einer Fahrtrichtungsänderung die Druckrollen bei Auftreffen auf ein Hindernis oder sogar bei Bodenkontakt infolge von Bodenunebenheiten nicht beschädigt oder seitlich größeren Kräften ausgesetzt werden.

Im Ausführungsbeispiel ist die Egge mit Sämaschine 10 mit Furchenöffner- und Druckrolleneinrichtungen 30 ausgerüstet, die jeweils aus einer Gruppe mit zwei Einheiten bestehen. Doch können anstelle der paarweise angeordneten Furchenöffnereinrichtungen 32 in einer Arbeitsgruppe jeweils drei oder vier Furchenöffnereinrichtungen 32 mit den zugehörigen Druckrollen 34 zusammengefaßt werden. Wie aus Fig. 2 hervorgeht, können an den Hauptrahmen 12 unterschiedlich große Arbeitsgruppen angeschlossen werden, um bei der Bodenbearbeitung die gewünschte Bodentiefe zu erreichen. Im Ausführungsbeispiel sind jeweils zwei Halterungen 62 mit den zugehörigen Federn vorgesehen, um die Arbeitsgruppen an den Hauptrahmen 12 anzuschließen. Jedoch kann auch lediglich eine Halterung 62 vorgesehen werden, um die beschriebenen Arbeitsgruppen mit jeweils zwei Furchenöffnereinrichtungen 32 und den beiden zugehörigen Druckrollen 34 an den Hauptrahmen 12 anzuschließen (siehe Anordnung 240 gemäß Fig. 2). Wie aus Fig. 2 ferner hervorgeht,
sind zwei Querträger 242 zu einem Hauptrahmen gelenkig
verbunden, wobei die entsprechenden Rahmenteile bzw. Querträger 242 auf einfache Weise durch die zugehörige Furchenöffner- und Druckrolleneinrichtung 30 angehoben werden können, bis sie eine aufrechte Lage eingenommen haben, mit
der eine einfache Transportfahrt des Arbeitsgerätes möglich
ist. Haben die Querträger 242 ihre bestimmte Transportstellung eingenommen, so werden die Druckrollen 34 entsprechend
weit von dem Boden entfernt, so daß die Zugstangen 222
nicht notwendig werden.

0140190

Case 12536 EP

## Patentansprüche

1. Sämaschine mit einem quer verlaufenden Hauptrahmen (12, Querträger 36), der sich auf Laufrädern abstützt und an dem Furchenöffner- und Druckrolleneinrichtungen (30, 32) angeordnet sind, wobei zumindest die Furchenöffnereinrichtungen (32) an vertikal verschwenkbar gelagerten Lenkern (148) angeordnet und gegen die Wirkung von Federn (160, 186) verstellbar sind, dadurch gekennzeichnet, daß an dem Hauptrahmen (12, Querträger 36) sich in Längsrichtung erstreckende, in Vertikalebene verschwenkbare Träger (68) zur endseitigen Aufnahme von Druckrollen (34) angeordnet sind und die vertikal verschwenkbaren Lenker (148) zur Aufnahme der in der gleichen Ebene wie die Druckrollen (34) angeordneten Furchenöffnereinrichtungen (32) mittels einer Gelenkverbindung (Schraubenbolzen 152) vor den Druckrollen an die Träger (68) angeschlossen sind, die gemeinsam mit der Gelenkverbindung gegenüber dem Hauptrahmen (12, 36) vertikal verschwenkbar sind.

2. Sämaschine nach Anspruch 1, dadurch gekennzeichnet, daß die Druckrollen (34) an Tragarmen (98) drehbar gelagert sind, die um eine annähernd aufrecht stehende Achse (102) an den vertikal schwenkbar gelagerten Trägern (68) verschwenkbar angeordnet sind.

3. Sämaschine nach Anspruch 1 oder 2, dadurch gekennzeichnet, daß an dem Hauptrahmen (12) mindestens zwei mit Abstand zueinander angeordnete Träger (68) schwenkbar gelagert sind, die im Bereich ihrer vorderen Enden über einen ersten Querträger (132) und im Bereich ihrer hinteren Enden über einen zweiten Querträger bzw. Winkelträger (92) miteinander verbunden sind, wobei an dem ersten Querträger (132) die Lenker (148) für die Furchenöffnereinrichtungen (32) und an dem zweiten Winkelträger (92) die Tragarme (98) für die Druckrollen (34) schwenkbar angeschlossen sind.

4. Sämaschine nach Anspruch 3, dadurch gekennzeichnet, daß der erste Querträger (132) als Hutprofil-Querträger ausgebildet ist und einen vorderen Steg (138) zum wahlweisen Anschluß eines vorderen Lenkers (148) und einen hinteren Steg (139) zum wahlweisen Anschluß eines hinteren Lenkers (148) aufweist.

5. Sämaschine nach einem oder mehreren der vorherigen Ansprüche, dadurch gekennzeichnet, daß die Träger (68) über eine eine Feder (82) aufweisende Zugstange (76) mit dem Hauptrahmen (12 oder 36) gelenkig verbunden sind, wobei die Feder der Aufwärtsbewegung des Trägers (68) entgegenwirkt.

6. Sämaschine nach Anspruch 5, dadurch gekennzeichnet, daß die Feder (82) auf der Zugstange (76) angeordnet ist, daß die Feder (82) zwischen einem Gelenklager der Zugstange am Träger und einem zweiten Gelenklager am Hauptrahmen (12, 36) eingeklemmt ist und das zweite Gelenklager eine Querbohrung zur verschiebbaren Aufnahme der Zugstange (76) aufweist.

7. Sämaschine nach einem oder mehreren der vorherigen Ansprüche, dadurch gekennzeichnet, daß Rahmenteile der Furchenöffnereinrichtung (32) über ein Gestänge (216) an einen gegenüber dem Hauptrahmen (12, 36) einstellbaren Stellarm (174) angeschlossen sind und daß zwischen einer auf dem Gestänge (216) angeordneten, in verschiedenen Positionen arretierbaren Klammer (188) und dem Stellarm (174) eine Feder (186) angeordnet ist, die bei einer Aufwärtsverstellung der Furchenöffnereinrichtung (32) bzw. der zugehörigen Lenker (148), die unmittelbar unterhalb der oberen Anschlußstelle des Gestänges (216) an den Hauptrahmen (12) angeschlossen sind, und bei einer Verschiebung des Stellarmes in einem Gelenklager (Gelenkbolzen 178) eine annähernd konstante Kraft auf die Furchenöffnereinrichtung ausübt.

8. Sämaschine nach Anspruch 7, dadurch gekennzeichnet, daß die Achse bzw. die Kraftlinie der Feder (186) mit Bezug auf die Standfläche der Sämaschine geneigt und oberhalb des zweiten Trägers (132) verläuft, wobei der Abstand zwischen der Kraftlinie und dem zweiten Träger (132) kleiner wird, wenn der zweite Träger gemeinsam mit dem längs verlaufenden Träger (68) nach oben verschwenkt wird.

9. Sämaschine nach Anspruch 7, dadurch gekennzeichnet, daß der Stellarm (174) mittels einer am Hauptrahmen (12) angeordneten Stellvorrichtung (Kurbelarm 200) gegenüber dem Hauptrahmen zur Veränderung der Stellkraft der Feder (186) verschwenkbar ist.

10. Sämaschine nach einem oder mehreren der vorherigen Ansprüche, dadurch gekennzeichnet, daß die Stellvorrichtung (Kurbelarm 200) an einen am Hauptrahmen (12, 36) in Halterungen drehbar gelagerten Querträger (166) angeschlossen ist.

11. Sämaschine nach einem oder mehreren der vorherigen Ansprüche, dadurch gekennzeichnet, daß an dem Querträger (166) zahlreiche Stellarme (174) zum gelenkigen und verschiebbaren Anschluß der Stangen (182) vorgesehen sind, die mit ihren entsprechenden unteren Enden an die Rahmenteile der Furchenöffnereinrichtungen (32) gelenkig angeschlossen sind.

12. Sämaschine nach einem oder mehreren der vorherigen Ansprüche, dadurch gekennzeichnet, daß am oberen Ende der die Feder (82) aufnehmenden Zugstange (76) eine weitere Zugstange (222) gelenkig angeschlossen ist, die mit ihrem unteren Ende in einer am Träger (68) vorgesehenen Halterung axial verschiebbar aufgenommen ist.

13. Sämaschine nach einem oder mehreren der vorherigen Ansprüche, dadurch gekennzeichnet, daß der Tragarm (98) zur Aufnahme der Druckrollen (34) am Ende der vertikal verschwenkbaren Träger (68) beweglich angeschlossen ist.

14. Sämaschine nach Anspruch 13, dadurch gekennzeichnet, daß die Gelenkverbindung zwischen dem Tragarm (98) und dem Träger (68) aus einer elastischen Buchse (118) gebildet ist, die zwischen der Unterseite des Trägers (68) und der Oberseite des Tragarmes (98) eingeklemmt und mittels eines Schraubenbolzens (108) gesichert ist.

15. Sämaschine nach Anspruch 14, dadurch gekennzeichnet, daß die Druckrollen (34) um eine annähernd vertikal verlaufende, sich durch den Schraubenbolzen (108) erstreckende Achse (102) verschwenkbar sind.

FIG. 1

FIG. 2

1/4

0140190

FIG. 3

FIG. 4

3/4

0140190

FIG. 5

FIG. 6

FIG. 7